Europäisches Patentamt

European Patent Office

Office européen des brevets

(11) Veröffentlichungsnummer: **0 295 463 B1**

(12) **EUROPÄISCHE PATENTSCHRIFT**

(45) Veröffentlichungstag der Patentschrift: **02.09.92**

(51) Int. Cl.⁵: **C02F 1/48**

(21) Anmeldenummer: **88108251.5**

(22) Anmeldetag: **24.05.88**

(54) Vorrichtung zur magnetischen Wasserbehandlung.

(30) Priorität: **15.06.87 CH 2251/87**

(43) Veröffentlichungstag der Anmeldung:
**21.12.88 Patentblatt 88/51**

(45) Bekanntmachung des Hinweises auf die
Patenterteilung:
**02.09.92 Patentblatt 92/36**

(84) Benannte Vertragsstaaten:
**AT DE FR GB NL SE**

(56) Entgegenhaltungen:
**WO-A-81/02529**
**DE-A- 3 303 015**

(73) Patentinhaber: **CHEMONORM AG**
**Höhgaden/Elmerstrasse 6**
**CH-8852 Altendorf(CH)**

(72) Erfinder: **Künzle, Virgil**
**Elmerstrasse 6**
**CH-8852 Altendorf(CH)**

(74) Vertreter: **Scheidegger, Werner & Co.**
**Siewerdtstrasse 95**
**CH-8050 Zürich(CH)**

## Beschreibung

Die vorliegende Erfindung betrifft eine Vorrichtung zur magnetischen Wasserbehandlung, mit einem zylinderförmigen Behälter mit an seinen achsialen Enden angeordneten Anschlusspartien für Röhren zum Zuführen bzw. Abführen von Wasser und mit mehreren im Behälter fest angeordneten Permanentmagneten zur Erzeugung von Magnetfeldern, deren Feldlinien mindestens zum Teil die freien Durchflussräume für das Wasser durchdringen, wobei jeder der Permanentmagnete ringförmig gestaltet ist und an seinen axialen Enden eine magnetische Nord- bzw. Südpolfläche aufweist, und die ringförmigen Permanentmagnete im Behälter gleichachsig und mit gleicher Orientierung bezüglich ihrer Polaritäten angeordnet sind, derart, dass zwischen den einander benachbarten Permanentmagneten jeweils ein freier Zwischenraum mit achsparallel verlaufenden Magnetfeldlinien vorhanden ist.

Es ist allgemein bekannt, dass hartes Wasser, das einen erheblichen Anteil von gelösten Mineralstoffen, insbesondere Kalzium, enthält, zur Bildung von Kesselstein in Rohrleitungen, Hähnen und Apparaten, wie z.B. Heizkesseln, Boiler, Waschmaschinen, Kaffeemaschinen usw., führen kann. Die Folgen derartiger Verkalkungen sind Druckverluste und Verluste an Wärmeenergie bzw. ein höherer Bedarf an Energie und Zeit, um eine gewünschte Wassertemperatur zu erreichen.

Zur Vermeidung der geschilderten Erscheinungen sind zahlreiche Verfahren und Einrichtungen bekannt geworden, die eine Enthärtung des Wassers vor dem Gebrauch desselben zum Ziel haben. Bei der Enthärtung werden dem Wasser z.B. durch chemische Zusätze oder mit Hilfe von Ionenaustauscher-Harzen die Mineralstoffe weitgehend entzogen oder chemisch umgewandelt. Im Falle von Trinkwasser ist diese Wasserenthärtung problematisch, weil die für die Gesundheit von Mensch und Tier notwendigen Kalzium-, Magnesium- und Kaliumsalze des Wassers gegen Natriumsalze ausgetauscht werden. Mit solchem enthärtetem Wasser kann z.B. eine "kochsalzarme" Diät nicht mehr zubereitet werden, und ursprünglich gipsreiches Wasser kann nach der Enthärtung laxativ wirken, weil das Kalziumsulfat in Natriumsulfat, das ist Glaubersalz, umgewandelt wird. Mittels Kationenaustauscher-Harzen enthärtetes Wasser weist in heissem Zustand oft einen seifigen Geschmack auf, weil das im Wasser ursprünglich vorhandene Kalziumkarbonat in Natriumkarbonat, das ist Soda, umgewandelt wird. Diese geschmackliche Beeinträchtigung tritt besonders bei der Verwendung des Wassers in Kaffee- oder Teemaschinen auf. Enthärtetes Wasser ist zudem aggressiv und oft die Ursache von Korrosionen. Schliesslich hat sich auch gezeigt, dass in enthärtetem Wasser das Wachstum von Algen und Bakterien begünstigt ist.

Als Alternativen zur Wasserenthärtung durch chemische Zusätze oder mittels Ionenaustauscher-Harzen sind auch verschiedene physikalische Verfahren und Vorrichtungen zur Wasserbehandlung bekannt geworden, die zum Ziel haben, die Entstehung von schädlichem Kesselstein ohne eigentliche Enthärtung des Wassers zu verhüten. Zu den physikalischen Verfahren gehören insbesondere die Behandlungen des Wassers mit elektrischen Stromimpulsen, mit Ultraschall oder mit Magnetfeldern, die durch Elektromagnete oder Permanentmagnete erzeugt werden. Die Wasserbehandlung mittels Permanentmagneten hat den Vorteil, keine äussere Stromversorgung zu benötigen und keine Energie zu verbrauchen.

Die vorliegende Erfindung bezieht sich auf die Wasserbehandlung durch Permanentmagnete. Es ist bereits bekannt, dass die in Wasser gelösten Salze beim Durchqueren eines Magnetfeldes von ausreichend hoher Feldstärke physikalisch derart modifiziert werden, dass sie über einen Zeitraum von 30 und mehr Stunden in der wässrigen Phase verharren, selbst wenn das Wasser erhitzt wird, und dass nachher das im Wasser enthaltene Kalziumkarbonat nicht mehr in der üblichen Form von makrokristallinem Kalzit, welcher zur Bildung des harten Kesselsteins führt, sondern in der Form von mikrokristallinem Aragonit ausfällt, der ein mit dem fliessenden Wasser wegschwemmbares Pulver ist.

So zeigt beispielsweise die DE-A-3 303 015 eine Vorrichtung der bereits eingangs geschilderten Art (s. auch Oberbegriff von Anspruch 1). Leider vermag die Wirkung dieser Vorrichtung nicht in allen Belangen zu überzeugen, und es entsteht ein zu hoher Druckabfall.

Aufgabe der Erfindung ist es nun, eine diese physikalische Erscheinung nutzende Vorrichtung des eingangs genannten Art derart auszugestalten, dass sie trotz kompakter konstruktiv einfacher Ausbildung eine gegenüber bekannten Vorrichtungen dieser Art erhöhte Wirkung gewährleistet und einen nur verhältnismässig geringen Druckabfall verursacht, der innerhalb der vom Schweizerischen Verein des Gas- und Wasserfaches gesetzten Toleranzgrenze liegt.

Diese Aufgabe ist erfindungsgemäss durch die Schaffung der Vorrichtung gemäss dem Patentanspruch 1 gelöst.

Bei der erfindungsgemässen Vorrichtung sorgen die Strömungslenkungsorgane dafür, dass das den zylinderförmigen Behälter durchströmende Wasser jeweils mit kreisender Bewegung durch das zwischen den einander benachbarten Permanentmagneten herrschende Magnetfeld mit hauptsächlich achsparallel verlaufenden Feldlinien fliesst.

Hierdurch wird eine erhöhte Strömungsgeschwindigkeit des Wassers im wesentlichen rechtwinklig zu dem magnetischen Feldlinien erzielt und damit die angestrebte gute Wirkung der magnetischen Wasserbehandlung herbeigeführt.

Zweckmässige und bevorzugte Weiterbildungen der erfindungsgemässen Vorrichtung ergeben sich aus den abhängigen Patentansprüchen.

Zur Erläuterung der Erfindung und deren Vorteile sind nachstehend einige bevorzugte Ausführungsformen der Vorrichtung gemäss der Erfindung unter Bezugnahme auf die beigefügten Zeichnungen rein beispielsweise beschrieben. Es zeigen:

Fig. 1 ein erstes Ausführungsbeispiel der erfindungsgemässen Vorrichtung im achsialen Längsschnitt nach der Linie 1-1 in den Fig. 2 und 3;

Fig. 2 einen Querschnitt nach der Linie 2-2 in Fig. 1;

Fig. 3 einen Querschnitt nach der Linie 3-3 in Fig. 1;

Fig. 4 einen Ausschnitt von Fig. 1 in grösserem Massstab, mit zusätzlichen Magnetfeldlinien und Strömungspfeilen;

Fig. 5 einen Teil der Vorrichtung im Schnitt nach der Linie 5-5 in Fig. 4 und entlang einer zur Längsachse der Vorrichtung koaxialen Zylinderfläche;

Fig. 6 einen Teil eines zweiten Ausführungsbeispiels der Vorrichtung im achsialen Längsschnitt nach der Linie 6-6 in Fig. 7;

Fig. 7 einen Querschnitt nach der Linie 7-7 in Fig. 6;

Fig. 8 einen Teil eines dritten Ausführungsbeispiels der Vorrichtung im achsialen Längsschnitt nach der Linie 8-8 in Fig. 9;

Fig. 9 einen Querschnitt nach der Linie 9-9 in Fig. 8.

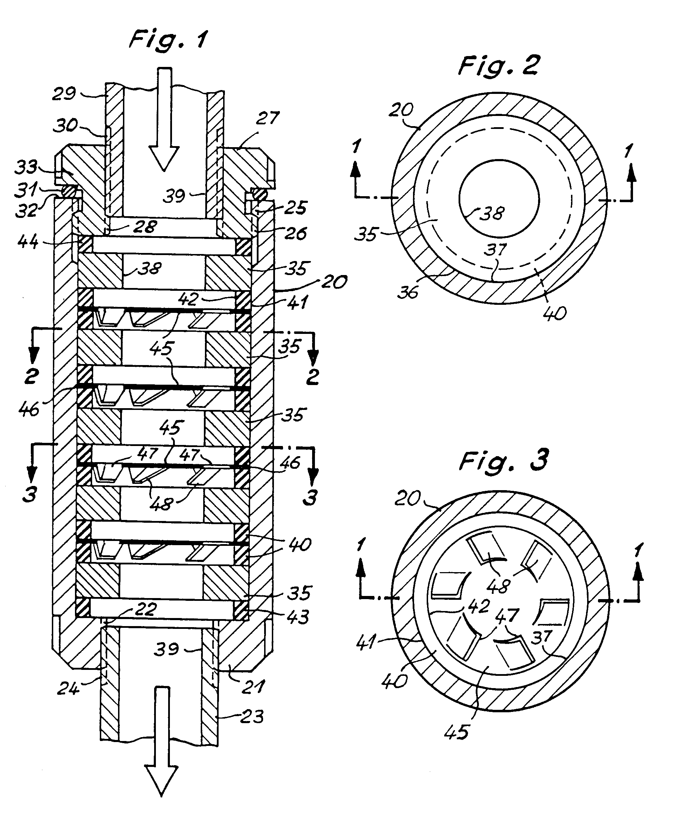

Die in den Fig. 1 bis 5 dargestellte Vorrichtung zur magnetischen Wasserbehandlung weist einen im wesentlichen zylinderförmigen Behälter 20 aus magnetisch nichtleitendem Material, z.B. aus einer Aluminiumlegierung, auf. An dem in Fig. 1 unteren Ende des Behälters 20 befindet sich ein radial einwärts gerichteter Endflansch 21 mit einer zentralen Gewindebohrung 22, in die ein Abflussrohr 23 mittels eines Aussengewindes 24 eingeschraubt ist. Die entgegengesetzte, in Fig. 1 obere Endpartie des Behälters 20 weist ein Innengewinde 25 auf, in welches ein entsprechender Gewindeteil 26 eines Gewinderinges 27 eingeschraubt ist. Der Gewindering 27 ist ferner mit einem Innengewinde 28 versehen, mit welchem ein Zuflussrohr 29 mittels eines Aussengewindes 30 verschraubt ist. Ein gummielastischer Dichtungsring 31 ist zwischen die in Fig. 1 obere Endfläche 32 des Behälters 20 und eine radial auswärts gerichtete Flanschpartie 33 des Gewinderinges 27 eingeklemmt.

Im Innenraum des Behälters 20 sind mehrere ringförmige Permanentmagnete 35 in Abständen voneinander gleichachsig angeordnet. Alle diese Permanentmagnete sind identisch ausgebildet und derart dimensioniert, dass ihre äusseren Umfangsflächen 36 an der zylindrischen Innenfläche 37 der Umfangswand des Behälters 20 anliegen, und dass ihre inneren Umfangsflächen 38 wenigstens annähernd den gleichen Durchmesser wie die Innenflächen 39 der Rohre 23 und 29 aufweisen. Zwischen den aufeinanderfolgenden Permanentmagneten 35 befinden sich Abstandhalter in Gestalt von Ringen 40, die aus magnetisch nichtleitendem, vorzugsweise gummielastischem Material bestehen. Alle diese ringförmigen Abstandhalter 40 sind identisch ausgebildet und derart dimensioniert, dass ihre äusseren Umfangsflächen 41 an der Innenfläche 37 der Umfangswand des Behälters 20 anliegen, und dass ihre inneren Umfangsflächen 42 je einen beträchtlich grösseren Durchmesser als die inneren Umfangsflächen 38 der Permanentmagnete 35 haben. Hierdurch ist erreicht, dass zwischen den einander benachbarten Permanentmagneten 35 jeweils ein freier Zwischenraum vorhanden ist, wie deutlich Fig. 1 zeigt. Jeweils ein Paar der ringförmigen Abstandhalter 40 befindet sich zwischen zwei einander benachbarten Permanentmagneten 35. Zusätzlich ist ein gleicher oder ähnlicher ringförmiger Abstandhalter 43 zwischen dem Endflansch 21 des Behälters 20 und dem in Fig. 1 untersten Permanentmagneten 35 angeordnet, während ein weiterer gleicher oder ähnlicher ringförmiger Abstandhalter 44 zwischen dem Gewindering 27 und dem in Fig. 1 obersten Permanentmagneten 35 eingeschaltet ist.

Zwischen den einander benachbarten Permanentmagneten 35 befindet sich jeweils ein scheibenartiger Bauteil 45, der rechtwinklig zur Längsachse des Behälters 20 liegt und durch den erwähnten freien Zwischenraum zwischen den benachbarten Permanentmagneten radial hindurch ragt. Die äusserste Umfangspartie 46 jedes scheibenartigen Bauteils 45 reicht bis zu Innenfläche 37 der Umfangswand des Behälters 20 und ist zwischen den angrenzenden, ein Paar bildenden ringförmigen Abstandhaltern 40 festgeklemmt. Jeder dieser scheibenartigen Bauteile 45 besteht aus magnetisch nichtleitendem Material, z.B. einer nichtrostenden Stahllegierung, und weist eine Umfangsreihe von Durchbrechungen 47 für den Durchlass von Wasser sowie eine Umfangsreihe von den Durchbrechungen 47 zugeordneten Strömungsleitflügeln 48 auf. Bei dem dargestellten Ausführungsbeispiel sind die Durchbrechungen 47 und die Flügel 48 durch Ausschneiden und Aufbiegen von Lappen gebildet. Die Flügel 48 weisen Leitflächen auf, die nach Art von Schraubenflächenpartien mit gleichsinnigen Steigungen gestaltet sind, um das vom Zuflussrohr 29 zum Abflussrohr 23 durch den Behälter 20 fliessende Wasser jeweils mit in Umfangsrichtung der ringförmigen Permanentmagnete 35 verlaufenden Bewegungskomponenten durch die freien Zwischenräume zwischen den einander benachbarten Permanentmagneten zu lenken. Vorzugsweise ist die Summe der Durchlassquerschnitte der Durchbrechungen 47 wenigstens annähernd so gross wie der Durchflussquerschnitt der Rohre 23 und 29, damit der resultierende Druckabfall verhältnismässig gering bleibt. Zweckmässig sind alle scheibenartigen Bauteile 45 gleich ausgebildet und in gleicher Weise angeordnet, so dass die durch die Flügel 48 herbeigeführte schraubenlinienartig kreisende Bewegung des Wassers sich über die ganze achsiale Länge des Behälters 20 gleichsinnig fortsetzt.

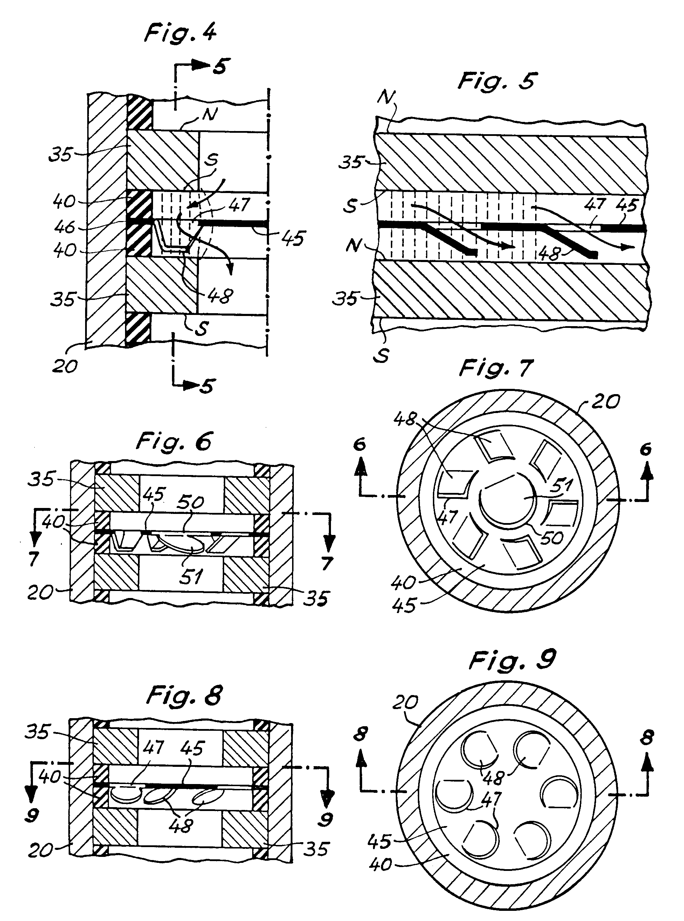

Die ringförmigen Permanentmagnete 35 sind achsial magnetisiert und weisen an ihren achsialen Enden je eine magnetische Nordpolfläche N bzw. Südpolfläche S auf. Alle Permanentmagnete sind bezüglich ihrer Polaritäten gleich orientiert, derart dass in den freien Zwischenräumen zwischen den einander benachbarten Permanentmagneten jeweils ein Magnetfeld mit achsparallel verlaufenden Magnetfeldlinien vorhanden ist, wie in den Fig. 4 und 5 mit gestrichelten Linien angedeutet ist. Die magnetische Feldstärke liegt im Bereich von 3000 bis 3500 Gauss.

Fig. 1 lässt erkennen, dass die Permanentmagnete 35, die ringförmigen Abstandhalter 40, 43 und 44 sowie die scheibenartigen Bauteile 45 zusammen eine sandwichartige Anordnung bilden, die einerseits gegen den Endflansch 21 des Behälters 20 und andererseits gegen den Gewindering 27 abgestützt ist, wobei die ringförmigen Abstandhalter 40, 43 und 44 elastisch komprimiert sind.

Die Vorrichtung wird in eine Frischwasser-Zuflussleitung in einem Gebäude oder Gebäudeteil für industrielle oder Wohnzwecke eingebaut, wobei der Behälter 20 eine beliebige Orientierung im Raume einnehmen kann. Die Wirkungsweise der Vorrichtung lässt sich anhand der Fig. 4 und 5 erkennen. Das den Behälter 20 vom Zuflussrohr 29 zum Abflussrohr 23 durchströmende Wasser ist gezwungen, durch die Durchbrechungen 47 der scheibenartigen Bauteile 45 hindurchzutreten, wobei die Flügel 48 dem Wasser eine schraubenlinienartig kreisende Bewegung durch die freien Zwischenräume zwischen den einander benachbarten Permanentmagneten 35 erteilen. Dabei bewegt sich das Wasser mit erhöhter Strömungsgeschwindigkeit im wesentlichen quer zu den Feldlinien der zwischen den einander benachbarten Permanentmagneten 35 herrschenden Magnetfelder, wobei die gewünschte magnetische Behandlung des Wassers eintritt. Gemäss Fig. 1 weist die Vorrichtung beispielsweise vier Behandlungsstufen auf, die nacheinander vom Wasser durchflossen werden, so dass eine gute Wirkung der magnetischen Wasserbehandlung erzielt wird. Das Wasser wird dabei nicht enthärtet, sondern die im Wasser gelösten Salze, insbesondere Kalziumkarbonat, werden unter dem Einfluss der Magnetfelder physikalisch modifiziert, so dass sie nachher über einen verhältnismässig langen Zeitraum von 30 und mehr Stunden in der wässrigen Phase verharren und schliesslich in Form eines weichen, mikrokristallinen Schlammes ausfallen, der keine festen Krusten, wie Kesselstein, bildet, sondern mit dem fliessenden Wasser leicht wegschwemmbar ist und in trockenem Zustand zu einem flaumigen Pulver wird. Bei dieser magnetischen Wasserbehandlung bleiben alle für Menschen und Tiere wichtigen Mineralstoffe in ihrer natürlichen chemsichen Zusammensetzung im Wasser enthalten, und es ergeben sich keine Geschmacksveränderungen des behandelten Wassers.

Der Aufbau und die Dimensionierung der beschriebenen Vorrichtung können im Hinblick auf die Erzielung der gewünschten Langzeitwirkung der molekularen Umwandlung der im Wasser gelösten Salze optimalisiert werden, wobei die Durchflussmenge des Wassers pro Zeiteinheit, die Strömungsgeschwindigkeit des Wassers durch die Magnetfelder, die magnetische Feldstärke, die Anzahl der Behandlungsstufen, die Ausgestaltung der scheibenartigen Bauteile 45 zur Strömungslenkung sowie der höchstens tolerierbare Druckabfall wesentliche Parameter sind. Zum Beispiel in einer Wasserleitung aus Röhren mit 1 Zoll-Gasgewinden und für Durchflussmengen im Bereich von 12 bis 84 l/min, vorzugsweise mindestens 42 l/min, hat sich in der Praxis eine Vorrichtung gemäss den Fig. 1 bis 5 mit vier oder fünf Behandlungsstufen, also mit fünf oder sechs Permanentmagneten 35,bewährt, deren magnetische Feldstärke 3200 bis 3500 Gauss beträgt, wobei der Behälter 20 einen Innendurchmesser von 45 mm und eine achsiale Länge von 130 bis 150 mm aufweist und der resultierende Druckabfall weniger als 0,5 bar beträgt.

Das in den Fig. 6 und 7 veranschaulichte zweite Ausführungsbeispiel der erfindungsgemässen Vorrichtung unterscheidet sich von jenem gemäss den Fig. 1 bis 5 lediglich dadurch, dass jeder der scheibenartigen Bauteile 45 in seiner Mittelpartie eine zusätzliche Durchbrechung 50 und einen zugeordneten Flügel 51 zur Strömungslenkung aufweist. Der Flügel 51 ist derart geformt und gerichtet, dass er das durch die Durchbrechung 50 fliessende Wasser radial auswärts in den Bereich des dortigen Magnetfeldes lenkt. Die Durchbrechung 50 und der Flügel 51 sind zweckmässig ebenfalls durch Ausschneiden und Aufbiegen eines Lappens gebildet. Die Variante gemäss den Fig. 6 und 7 erlaubt eine weitere Senkung des resultierenden Druckabfalls des die Vorrichtung durchfliessenden Wassers.

Die Fig. 8 und 9 zeigen ein drittes Ausführungsbeispiel, das sich von jenem gemäss den Fig. 1 und 5 lediglich dadurch unterscheidet, dass die in einer Umfangsreihe angeordneten Durchbrechungen 47 und die zugehörigen Flügel 48 anders geformt sind, nämlich bogenförmige Begrenzungen aufweisen, was einfachere und preisgünstigere Werkzeuge für die Herstellung der scheibenartigen Bauteile 45 erlaubt. In nicht dargestellter Weise kann auch bei der Ausführungsform der Vorrichtung nach den Fig. 8 und 9 jeder scheibenartige Bauteile 45 mit einer zusätzlichen zentralen Durchbrechung und einem zugehörigen Strömungsleit-Flügel versehen sein, wie in den Fig. 6 und 7 gezeigt ist.

Es ist klar, dass zahlreiche weitere Abwandlungen der beschriebenen und dargestellten Ausführungsformen der erfindungsgemässen Vorrichtung möglich sind. Zum Beispiel können die ringförmigen Abstandhalter 40 zwischen den einander benachbarten Permanentmagneten 35 je durch eine Anzahl Zapfen oder Nocken ersetzt sein, die am betreffenden scheibenartigen Bauteil 45 befestigt bzw. angeformt sind. Anstatt aus magnetisch nichtleitendem Blech können die scheibenartigen Bauteile 45 ebenso gut aus einem polymeren Kunststoff bestehen und als Pressformteile ausgebildet sein, die zugleich auch als Abstandhalter 40 dienende Randpartien aufweisen.

## Patentansprüche

1. Vorrichtung zur magnetischen Wasserbehandlung, mit einem zylinderförmigen Behälter mit an seinen achsialen Enden angeordneten Anschlusspartien für Röhren zum Zuführen bzw. Abführen von Wasser und mit mehreren im Behälter fest angeordneten Permanentmagneten zur Erzeugung von Magnetfeldern, deren Feldlinien mindestens zum Teil die freien Durchflussräume für das Wasser durchdringen, wobei jeder der Permanentmagnete (35) ringförmig gestaltet ist und an seinen achsialen Enden eine magnetische Nord- bzw. Südpolfläche (N bzw.S) aufweist und die ringförmigen Permanentmagnete (35) im Behälter (20) gleichachsig und mit gleicher Orientierung bezüglich ihrer Polaritäten angeordnet sind, derart dass zwischen den einander benachbarten Permanentmagneten (35) jeweils ein freier Zwischenraum mit achsparallel verlaufenden Magnetfeldlinien vorhanden ist, dadurch gekennzeichnet, dass im Behälter (20) ferner Strömungslenkungsorgane (45, 47, 48) fest angeordnet und derart ausgebildet sind, dass sie das durch den Behälter (20) fliessende Wasser jeweils mit in Umfangsrichtung der ringförmigen Permanentmagnete (35) verlaufenden Bewegungskomponenten durch die Zwischenräume zwischen den einander benachbarten Permanentmagneten (35) zu lenken vermögen.

2. Vorrichtung nach Anspruch 1, dadurch gekennzeichnet, dass die äusseren Umfangsflächen (36) der ringförmigen Permanentmagnete (35) an der Innenfläche (37) der Umfangswand des Behälters (20) anliegen.

3. Vorrichtung nach Anspruch 1 oder 2, dadurch gekennzeichnet, dass die Strömungslenkungsorgane (45, 47, 48) an Abstandhaltern (40) abgestützt sind, welche sich zwischen den einander benachbarten ringförmigen Permanentmagneten (35) befinden.

4. Vorrichtung nach einem der Ansprüche 1 bis 3, dadurch gekennzeichnet, dass die Strömungslenkungsorgane durch scheibenartige Bauteile (45) gebildet sind, die je rechtwinklig zur Längsachse des Behälters (20) liegen und in die freien Zwischenräume zwischen den einander benachbarten ringförmigen Permanentmagneten (35) hineinreichen, und dass diese scheibenartigen Bauteile (45) aus magnetisch nichtleitendem Material bestehen und je eine Umfangsreihe von Durchbrechungen (47) für den Durchlass des Wassers sowie eine Umfangsreihe von an die Durchbrechungen (47) angrenzenden Flügeln (48) mit Leitflächen aufweisen, die wenigstens annähernd nach Art von Schraubenflächenpartien gestaltet sind.

5. Vorrichtung nach Anspruch 4, dadurch gekennzeichnet, dass jeder der scheibenartigen Bauteile (45) in seiner Mittelpartie mindestens eine zusätzliche Durchbrechung (50) und einen angrenzenden Flügel (51) mit einer Leitfläche aufweist, welche dem durchfliessenden Wasser eine radial auswärts gerichtete Bewegungskomponente zu erteilen vermag.

6. Vorrichtung nach Anspruch 4 oder 5, dadurch gekennzeichnet, dass die scheibenartigen Bauteile (45) je aus einer magnetisch nichtleitenden Metallplatte bestehen, an welcher die Durchbrechungen (47, 50) und Flügel (48, 51) durch Ausschneiden und Aufbiegen von Lappen gebildet sind.

7. Vorrichtung nach Anspruch 3 und einem der Ansprüche 4 bis 6, dadurch gekennzeichnet, dass die scheibenartigen Bauteile (45) je eine an die Innenfläche (37) der Umfangswand des Behälters (20) anliegende Umfangspartie (46) aufweisen, die zwischen zwei ringförmigen Abstandhaltern (40) zwischen einander benachbarten Permanentmagneten (23) gehalten ist, welche ringförmigen Abstandhalter gleichachsig zu den Permanentmagneten (35) angeordnet sind und je eine an die Innenfläche (37) der Umfangswand des Behälters (20) anliegende äussere Umfangsfläche (41) und eine innere Umfangsfläche (42) aufweisen, deren Durchmesser grösser als der Innendurchmesser der ringförmigen Permanentmagnete (23) ist.

8. Vorrichtung nach Anspruch 7, dadurch gekennzeichnet, dass die Umfangswand des Behälters (20) eine zylindrische Innenfläche (37) aufweist, dass die ringförmigen Abstandhalter (40) aus gummielastischem Material bestehen und in achsialer Richtung elastisch komprimierbar sind, und dass die Permanentmagnete (35), die ringförmigen Abstandhalter (40) und die scheibenartigen Bauteile (45) zusammen eine sandwichartige Anordnung bilden, die einerseits gegen einen festen Anschlag (21) im Behälter (20) und anderseits gegen einen am Behälter (20) lösbar befestigten Anschlag (27) abgestützt ist, wobei die ringförmigen Abstandhalter (40) elastisch komprimiert sind.

9. Vorrichtung nach Anspruch 8, dadurch gekennzeichnet, dass der am Behälter (20) lösbar befestigte Anschlag ein mit dem Behälter verschraubter Gewindering (27) ist.

## Claims

1. Magnetic water treatment device comprising a cylindric container having connecting means for supply or discharge tubes for the water provided at the axial ends thereof and a plurality of permanent magnets fixedly mounted inside of said container for producing magnetic fields having field lines traversing at least in part the free throughflowing chambers for the water, each of said permanent mangnets (35) being of ringshaped configuration and presenting at its axial ends a north pole and a south pole surface respectively (N resp. S), said ringshaped permanent magnets (35) being arranged on a common axis and with the same orientation of their polarities inside said container (20) in such a manner that between adjacent permanent magnets (35) be formed free spaces with magnetic field lines traversing these spaces in parallel to the axis, characterized in that flow guiding elements (45,47,48) are fixedly mounted inside said container (20) and constructed in a manner to direct the water flowing through the container (20) through the spaces between adjacent permanent magnets by imparting to the water flow movement components in the direction of the circumference of said ringshaped permanent magnets (35).

2. Device according to claim 1, characterized in that the exterior circumferential surfaces (36) of said ringshaped permanent magnets (35) are in contact with the interior surface (37) of the wall of the container (20).

3. Device according to claim 1 or 2, characterized in that the flow guiding elements (45,47,48) are supported by spacer elements (40) provided between adjacent permanent magnets (35).

4. Device according to any of claims 1 to 3, characterized in that the flow guiding elements are formed by disk-like elements (45) arranged perpendicularly with respect to the longitudinal axis of the container (20) and extending within said free spaces between adjacent permanent magnets (35), said disk-like elements (45) being of a magnetically non-conductive material and presenting a circumferential series of openings (47) for the throughflow of the water and a circumferential series of blades (48) adjoining said openings (47) and presenting guiding surfaces having at least approximately the shape of helicoidal surface parts.

5. Device according to claim 4, characterized in that each disk-like element (45) presents in its central part at least one additional opening (50) and an adjoining blade (51) with a guiding surface capable to impart to the throughflowing water a movement component directed radially outwardly.

6. Device according to claim 4 or 5, characterized in that each of said disk-like elements (45) comprises a plate of magnetically non-conductive metal on which said openings (47,50) and said blades (48,51) are formed by cutting out and turning upwardly tongues.

7. Device according to claim 3 and one of claims 4 to 6, characterized in that each of said disk-like elements (45) presents a circumferential portion applied against the interior surface (37) of the wall of the container (20) and held between two ringshaped spacer elements (40) arranged between adjacent permanent magnets (23), said ringshaped spacer elements being arranged on the axis of said permanent magnets (35) and presenting an exterior circumferential surface (41) abutting against the interior surface (37) of the wall of the container (20) as well as an interior circumferential surface (42 having a diameter greater than the interior diameter of said ringshaped permanent magnets (23).

8. Device according to claim 7, characterized in that the container (20) presents a cylindrical interior surface (37), in that said ringshaped spacer elements (40) are of a rubber elastic material and are compressible in axial direction, and in that said permanent magnets (35), said ringshaped spacer elements (40) and said disk-like elements (45) form a sandwich construction abutting on the one hand against a fixed stop (21) inside said container (20) and on the other hand against an abutment (27) releasably mounted on the container (20), whereby said ringshaped spacer elements (40) are elastically compressed.

9. Device according to claim 8, characterized in that said releasable abutment mounted on the container (20) comprises a threaded ring (27) screwed on the container.

**Revendications**

1. Dispositif pour le traitement magnétique de l'eau, comprenant un récipient cylindrique avec des moyens de raccord pour des tuyaux d'amené ou de décharge pour l'eau prévus à ses extrémités axiales et avec plusieurs aimants permanents fixés à l'intérieur du récipient pour produire des champs magnétiques dont les lignes de champs traversent au moins en partie les chambres d'écoulement libres pour l'eau, chacun des aimants permanents (35) ayant la forme d un anneau et présentant à ses extrémités axiales une surface de pôle nord et de pôle sud respectivement (N resp. S), lesdits aimants permanents (35) en forme d'anneau étant disposés sur le même axe et avec la même orientation de leurs polarités à l'intérieur du récipient (20), de manière à ce que entre des aimants permanents (35) voisins soient formés des espaces libres avec des lignes de champ magnétiques parcourant ces espaces parallèlement à l'axe, caractérisé en ce que des éléments dirigeant l'écoulement (45,47,48) sont arrangés de manière fixe à l'intérieur du récipient (20) et construit de manière à diriger l'eau s'écoulant à travers le récipient (20) à travers les espaces entre des aimants permanents voisins en lui imposant des composantes de mouvement en direction de la circonférence des aimants permanents en forme d'anneau (35).

2. Dispositif selon la revendication 1, caractérisé en ce que les surfaces circonférentielles extérieures (36) des aimants permanents en forme d'anneau (35) sont en contact avec la surface intérieure (37) de la paroi du récipient (20).

3. Dispositif selon la revendication 1 ou 2, caractérisé en ce que les éléments dirigeant l'écoulement (45,47, 48) s'appuyent sur des éléments écarteurs (40) disposés entre des aimants permanents (35) voisins.

4. Dispositif selon l'une des revendications 1 à 3, caractérisé en ce que les éléments dirigeant l'écoulement sont formés par des éléments (45) qui sont disposés perpendiculairement par rapport à l'axe longitudinal du récipient (20) et qui s'étendent dans les espaces libres entre les aiments permanents (35) voisins, et en ce que ces éléments en forme de disque (45) sont en un matériau non-conducteur de magnétisme et présentent une série circonférentielle d'ouvertures (47) pour le passage de l'eau et une série circonférentielle d'ailettes (48) avoisinant les ouvertures (47) avec des surfaces de guidage ayant au moins approximativement la forme de surfaces partielles en hélice.

5. Dispositif selon la revendication 4, caractérisé en ce que chaque élément en forme de disque (45) présente dans sa partie centrale au moins une ouverture (50) supplémentaire et une ailette adjacente (51) avec une surface de guidage capable d'imposer à l'eau qui s'écoule une composante de mouvement dirigée radialement vers l'extérieur.

6. Dispositif selon la revendication 4 ou 5, caractérisé en ce que chacun des éléments en forme de disque (45) comprend une plaque de métal non-conducteur de magnétisme sur laquelle les ouvertures (47,50) et les ailettes (48,51) sont formées par découpure et dépliage de pattes respectivement.

7. Dispositif selon la revendication 3 et une des revendications 4 à 6, caractérisé en ce que chacun des élément en forme de disque (45) présente une partie circonférentielle (46) s'appuyant contre la surface intérieure (37) de la paroi du récipient (20) et retenue entre deux écarteurs (40) en forme d'anneau disposés entre aimants permanents voisins (23), lesdits écarteurs étant arrangés sur l'axe des aimants permanents (35) et présentant une surface circonférentielle extérieure (41) s'appuyant contre la surface intérieure (37) de la paroi du récipient (20) ainsi qu'une surface circonférentielle intérieure (42) dont le diamètre est plus grand que le diamètre intérieur des aimants permanents (23) en forme d'anneau.

8. Dispositif selon la revendication 7, caractérisé en ce que le récipient (20) présente une surface intérieure cylindrique (37), en ce que les écarteurs (40) en forme d'anneau sont en un matériau de gomme élastique et sont compressible en direction axiale, et en ce que les aimants permanents (35), les écarteurs en forme d'anneau (40) et les éléments en forme de clisque (45) forment une construction en sandwich qui S'appuye d'une part contre une butée fixe (21) dans le récipient (20) et d'autre part contre une butée (27) montée de manière démontable sur le récipient, les écarteurs (40) pouvant être comprimés élastiquement.

9. Dispositif selon la revendication 8, caractérisé en ce que la butée amovible montée sur le récipient (20) est constituée par un anneau fileté (27) vissé sur le récipient.

Fig. 1

Fig. 2

Fig. 3

Fig. 4

Fig. 5

Fig. 6

Fig. 7

Fig. 8

Fig. 9